# DEMANDE DE BREVET EUROPEEN

(11) **EP 4 749 378 A1**
(43) Date de publication de la demande: **27.05.2026**
(21) Numéro de dépôt: 24214927.6
(22) Date de dépôt: 22.11.2024
(51) Int. Cl.: G04D 1/00, G04D 3/00

(54) **MÉTHODE DE FABRICATION D'APPLIQUES POUR L'HORLOGERIE**

(71) Demandeur: Universo S.A., 2300 La Chaux-de-Fonds (CH)
(72) Inventeur: NGUYEN, Duc Thuyet, 2074 Marin Epagnier (CH)
(74) Mandataire: ICB SA

(57) **Abrégé**

Une bande (1), uniformément constituée du matériau des appliques (2) à fabriquer, est pourvue le long de ses bords longitudinaux de rangées de trous pilotes (5) et d'au moins un groupe d'ouvertures (6a-6d) agencées entre lesdites rangées. Les ouvertures du groupe entourent une portion centrale (8) en matériau de la bande, de sorte que la portion centrale reste attachée à la bande par des attaches (7) formées par des zones étroites de la bande entre deux ouvertures adjacentes. Ladite portion centrale est ensuite soumise à une étape d'emboutissage pour former l'applique (2). Les dimensions et la forme des ouvertures (6a-6d) sont configurées telles que l'outil d'emboutissage fait fluer le matériau de la portion centrale (8) sans déformer les trous pilotes (5), produisant ainsi une pièce déformée (8') qui reste attachée à la bande par des attaches (7'). En même temps, sur une des faces de ladite pièce déformée, l'applique (2) est formée en relief par rapport à ladite face, de préférence accompagnée par des pieds d'attachement (4) sur la face opposée. Ensuite, la bande est emmenée vers un outil de découpage qui découpe l'applique, la séparant de cette manière de la pièce déformée. Les trous pilotes (5) non-déformées permettent de positionner précisément la pièce par rapport à l'outil de découpage.

## Description

### Domaine technique

L'invention concerne le domaine de l'horlogerie, notamment la production d'appliques à attacher à la surface d'un cadran de montre, pour réaliser l'indexage des heures ou l'agencement d'autres signes ou symboles.

### Arrière-plan technologique

Différentes méthodes ont été développées pour fabriquer les appliques. En termes de vitesse de production, les méthodes en continu se sont prouvées efficaces. Il s'agit notamment de méthodes selon lesquelles une bande est usinée en une série d'étapes qui finit par le découpage de plusieurs appliques.

Une méthode qui est aujourd'hui appliquée utilise une bande en acier dans laquelle des trous pilotes sont percés le long des bords de la bande, ainsi que des ouvertures agencées en série entre les rangées de trous pilotes. Des lopins du matériau des appliques, souvent l'or ou le laiton, sont chassés dans les ouvertures. La bande contenant les lopins est ensuite guidée à l'aide des trous pilotes, par rapport à un outil d'emboutissage qui déforme les lopins selon la forme souhaitée des appliques. Ensuite, la bande défile à travers un outil de découpage qui va découper les appliques. Les lopins sont ensuite déchassés de la bande en acier qui pourra ensuite être réutilisée dans le même processus.

La bande en acier étant plus résistante que le matériau des lopins, ce processus permet d'éviter la déformation des trous pilotes pendant les étapes d'emboutissage et de découpage. Néanmoins, cette approche comporte plusieurs inconvénients. La bande en acier est très dure et difficile à travailler. Or, la production des trous pilotes et des ouvertures demande des machines puissantes et les outils pour travailler la bande en acier cassent rapidement et résistent mal aux forces appliquées pour découper et percer. Lors de sa déformation par emboutissage, il y a beaucoup de contraintes dans le lopin, ce qui peut faire fissurer la bande en acier. Finalement, les ouvertures pour les lopins se déforment après plusieurs usages de la bande en acier, ce qui limite la durée de vie de ce type de bande.

### Résumé de l'invention

L'invention a pour objectif de proposer une méthode qui ne présente pas les inconvénients identifiés au paragraphe précédent. Cet objectif est atteint par une méthode selon les revendications attachées.

Selon l'invention, une bande est utilisée qui est uniformément constituée du matériau des appliques à fabriquer. La bande est pourvue le long de ses bords longitudinaux de rangées de trous pilotes et d'au moins un groupe d'ouvertures agencées entre lesdites rangées. Dans la pratique, plusieurs groupes identiques d'ouvertures sont prévus de manière équidistante dans la direction longitudinale de la bande. Les ouvertures d'un groupe entourent une portion centrale en matériau de la bande, de sorte que la portion centrale reste attachée à la bande par des attaches formées par des zones étroites de la bande entre deux ouvertures adjacentes. Ladite portion centrale est ensuite soumise à une étape d'emboutissage pour former l'applique. Les dimensions et la forme des ouvertures sont configurées telles que l'outil d'emboutissage fait fluer le matériau de la portion centrale sans déformer les trous pilotes, produisant ainsi une pièce déformée qui reste attachée à la bande par des attaches. En même temps, sur une des faces de ladite pièce déformée, l'applique est formée en relief par rapport à ladite face, de préférence accompagnée par des pieds d'attachement sur la face opposée. Ensuite, la bande est emmenée vers un outil de découpage, par exemple par étampage ou par laser qui découpe l'applique, la séparant de cette manière de la pièce déformée. Les trous pilotes non-déformées permettent de positionner précisément la pièce par rapport à l'outil de découpage.

La méthode permet de travailler en ligne et en continu depuis la matière première jusqu'aux appliques libérées, et évite donc l'utilisation d'une bande en acier. Grâce à la forme des portions centrales définies par les ouvertures qui absorbent la déformation lors de l'emboutissage, les trous pilotes de la bande ne se déforment pas et garantissent un positionnement optimal, assuré également par le fait que la pièce déformée reste attachée à la bande après l'emboutissage. Ces différences par rapport aux technologies existantes permettent à la méthode selon l'invention de réduire les coûts et les temps de fabrication.

### Brève description des figures

L'invention sera décrite ci-après de manière plus détaillée à l'aide des dessins annexés, donnés à titre d'exemples nullement limitatifs, dans lesquels :
- La figure 1 représente une vue de face d'une bande en matériau d'appliques pour l'horlogerie, pourvue de trous et ouvertures selon une forme d'exécution de l'invention.
- La figure 2 représente un exemple d'une applique fabricable à partir de la bande montrée à la figure 1.
- Les figure 3a à 3b représentent des vues élargies d'une partie de la bande. La figure 3a représente la bande avant la déformation par emboutissage. Les figures 3b et 3c représentent respectivement les deux faces de la bande, après la déformation par emboutissage.
- La figure 4 représente une vue en 3D de la bande, après la formation par emboutissage d'un nombre d'appliques, mais avant l'étape de découpage.
- La figure 5 représente la partie de la bande représentée aux figures 3a-3b, après le découpage des appliques.
- La figure 6 est une illustration d'un processus qui utilise une configuration de poinçons de découpage pour réaliser la bande pourvue de trous pilotes et d'ouvertures selon la figure 1.

### Description détaillée de l'invention

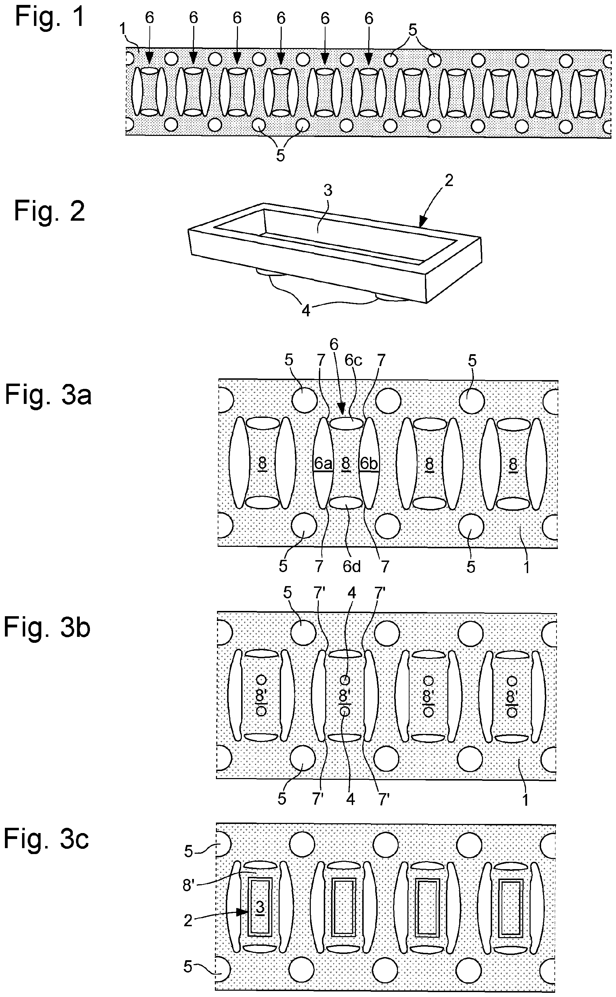

La figure 1 représente une bande 1 en un matériau utilisable pour les appliques de montre, par exemple le laiton ou un autre alliage à base de cuivre. Tout autre matériau applicable pour la fabrication d'appliques peut être utilisé, tel que l'or, l'argent ou leurs alliages.

La bande a été pourvue d'un nombre de trous et d'ouvertures selon une forme d'exécution non-limitative de l'invention. L'applique à fabriquer dans cet exemple est illustrée à la figure 2. Il s'agit d'une applique de forme rectangulaire 2 pourvue d'une loge centrale 3, et de deux pieds 4 sur la face inférieure qui vont servir de moyens d'attachement de l'applique sur un cadran de montre. Or, les dimensions de l'applique 2 sont adaptées aux dimensions dudit cadran, pour que l'applique puisse figurer comme index de temps ou comme élément décoratif. Par conséquence, la bande 1 est dimensionnée du même ordre, par exemple ayant une largeur d'entre 10 et 40 millimètres. Les dimensions de la bande peuvent être similaires aux dimensions des bandes en acier pourvues de lopins chassés, tel que décrit dans l'introduction. Selon des formes d'exécution non-limitatives, l'épaisseur de la bande 1 peut se situer entre 0,3 et 1,5 mm.

Le long des bords de la bande 1, des trous pilotes 5 équidistants sont produits par perçage ou découpage. Ces trous 5 sont localisés et dimensionnés pour permettre de guider la bande 1 par l'insertion de dents de guidage d'une installation avance-bande, dont le mouvement va transporter la bande à travers de différents outils.

Entre les deux rangées de trous pilotes 5, la bande 1 est pourvue de plusieurs groupes 6 d'ouvertures, les groupes 6 étant identiques entre eux et positionnés de manière équidistante dans la direction longitudinale de la bande 1.

La figure 3a représente une vue en détail d'une partie de la bande 1. Selon la forme d'exécution non-limitative représentée, chaque groupe d'ouvertures 6 comprend 4 ouvertures en forme d'ellipse. Les axes longs des ouvertures 6a et 6b sont orientés perpendiculairement à la direction longitudinale de la bande 1, alors que les axes longs des ouvertures 6c et 6d sont orientés parallèlement à ladite direction longitudinale. La longueur des ouvertures 6c et 6d est inférieure à la longueur des ouvertures 6a et 6b, et les ouvertures courtes 6c,6d se trouvent entre les extrémités des ouvertures longues 6a, 6b, tout en restant séparées des dernières par des attaches 7. Les attaches 7 sont définies par des zones étroites de la bande 1 qui se trouvent entre deux ouvertures adjacentes, par exemple entre 6a et 6c ou entre 6b et 6d. Par conséquent, les ouvertures 6a à 6d entourent une portion centrale 8 de la bande ayant des bords en forme de courbes concaves, lesdites courbes étant définies par des sections de contour des ouvertures 6a-6d.

Les dimensions et le placement des ouvertures 6a-6d de chaque groupe 6 sont déterminés tels que la portion centrale 8 puisse être déformée par une déformation plastique d'une manière spécifique et prédéfinie, par un outil d'emboutissage tel qu'il est utilisé dans la méthode antérieure décrite dans l'introduction. Cet outil va comprimer les portions centrales 8 entre une matrice et un poinçon, configurés pour former l'applique 2. Les ouvertures 6a-6d sont configurées telles que le matériau de la portion centrale 8 se déforme sans détacher les attaches 7, et sans déformer les trous de pilotage 5.

Ce résultat est illustré aux figures 3b et 3c, qui représentent les deux faces de la bande 1, après l'emboutissage appliqué à chacune des portions centrales 8. L'emboutissage a déformé les portions centrales 8, formant des pièces déformées 8'. Grâce aux profils de la matrice et du poinçon, les pieds 4 de l'applique sont formés sur la face supérieure de la pièce déformée (figure 3b) en relief par rapport à la face supérieur, et l'applique 2 elle-même, pourvue de la loge 3, est formée sur la face inférieure (figure 3c), en relief par rapport à ladite face inférieure. En dehors de l'applique, l'emboutissage a fait fluer le matériau, de sorte que la surface de la pièce déformée 8' soit élargie par rapport à la surface de la portion centrale 8 avant la déformation. On voit que les sections de contour des ellipses 6a-6d qui entourent la portion centrale 8 ont été poussés vers l'extérieur, mais que le restant desdits contours est resté essentiellement intact. En autre mots, les ouvertures 6a-6d ont absorbé la déformation. Par conséquent, les trous de pilotage 5 n'ont pas été déformés. De plus, après la déformation, la pièce déformée 8' est toujours attachée à la bande par des attaches 7' qui pourraient être légèrement déformées par rapport aux attaches originales 7, mais qui maintiennent l'uniformité de la pièce 8' avec la bande 1. Autrement dit, les attaches 7 n'ont pas été cassées ou rupturées à cause des forces générées par l'emboutissage.

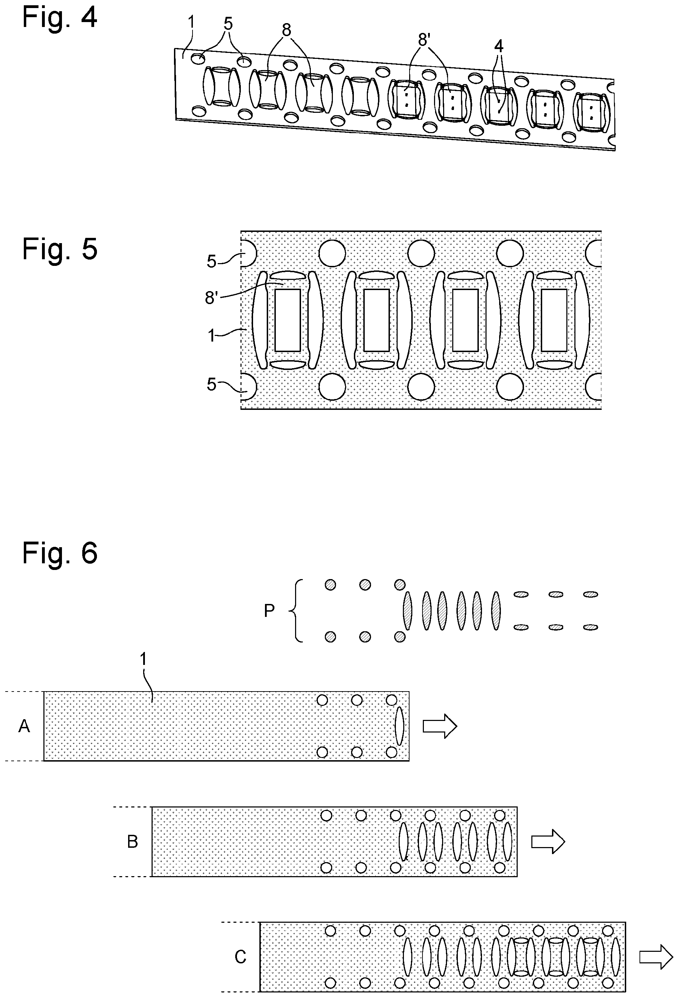

La figure 4 représente une vue 3D d'une forme d'exécution non-limitative de la bande 1 dont plusieurs portions centrales 8 ont défilé à travers l'outil d'emboutissage, formant des pièces déformées 8'. La forme des pièces déformées 8' est légèrement différente par rapport aux pièces plates 8' illustrées aux figures 3b et 3c. A la figure 4, on voit que les extrémités des pièces déformées 8' sont légèrement pliés vers le haut. Ces variantes sont tout à fait équivalentes, et dans les deux cas, l'emboutissage est exécuté sans déformation des trous pilotes 5 et sans rupture des attaches 7.

Après l'emboutissage, les pièces déformées 8' sont soumises à une étape de découpage pour séparer les appliques 2 des pièces déformées 8'. Les trous pilotes non-déformées permettent le positionnement précis des pièces 8' par rapport à l'outil de découpage. La figure 5 représente la partie de bande 1 montrée aussi aux figures 3a-3c après le découpage. L'outil utilisé pourrait être une machine à découper par laser ou un outil d'étampage qui est similaire à l'outil d'emboutissage mais qui est pourvu d'une matrice et d'un poinçon de découpage. Ces processus de découpage sont bien connus et également utilisés ou utilisables dans le cadre de la méthode décrite dans l'introduction. Dans le processus d'étampage, le poinçon a un dégagement qui permet de laisser passer le ou les pieds 4 des appliques 2. La matrice a la contreforme de l'applique et retient l'applique lors du découpage. Ensuite, un extracteur présent dans la matrice permet d'éjecter l'applique découpée.

Pour arriver à une configuration d'ouvertures qui permet d'atteindre le résultat souhaité, i.e. produire les appliques 2 sans déformer les trous de pilotage 5 et sans rompre ou casser les attaches 7, l'homme de l'art peut suivre la méthodologie décrite ci-dessous.

D'abord un nombre de paramètres est rassemblé, comprenant :
- le matériau à utiliser,
- la largeur et l'épaisseur de la bande,
- la forme et les dimensions de l'applique,
- le diamètre et l'espacement des trous pilotes.

Sur base de ces paramètres, une configuration d'ouvertures est déterminée à l'aide d'un logiciel de simulation qui permet de calculer la déformation d'une pièce travaillée par un outil d'emboutissage. Des exemples de logiciels disponibles sur le marché et utilisables pour réaliser l'invention comprennent les logiciels Forgea (producteur Transvalor) et Abaqus (producteur Dassault Systèmes).

Partant d'une configuration initiale obtenue par exemple sur base d'expérience ou de calculs préliminaires, le logiciel permet de simuler les forces exercées par les outils utilisés dans le processus et dériver de la simulation les déformations de la bande sous l'influence de ces forces. Le résultat permet d'optimiser la configuration de manière à minimiser les déformations à proximité des trous pilotes et d'optimiser la déformation des attaches pour éviter leur rupture, en répétant la simulation plusieurs fois, chaque fois améliorant la forme et les dimensions des ouvertures. L'optimisation peut être exécutée à l'aide du logiciel de simulation, ou éventuellement à l'aide d'autres logiciels de calcul bien connus par l'homme de l'art.

Il est à noter que l'invention n'est pas limitée à la configuration représentée, consistant de 4 ouvertures en forme d'ellipses. Le nombre d'ouvertures qui entourent la portion centrale 8 peut être différent, par exemple 3, 5 ou plus. La forme des ouvertures peut être autre qu'ellipsoïde, par exemple circulaire ou rectangulaire, ou une combinaison d'ouvertures de différentes formes peut être appliquée. Les contours qui permettent d'obtenir une portion centrale ayant des bords concaves par rapport au centre de la portion centrale (telle que la portion 8 montrée aux figures) représentent des formes d'exécution préférées, mais ce type de contour n'est pas limité aux ouvertures ellipsoïdes. Les bords concaves de la portion centrale peuvent être réalisés également en appliquant des ouvertures ayant d'autres contours, tels que des contours circulaires.

La détermination d'une configuration optimale dépend de plusieurs paramètres, dont la forme et les dimensions de l'applique, le matériau de la bande, et la forme et les dimensions des trous pilotes. Il est à noter que ces trous pilotes pourraient avoir une forme autre que circulaire (p.ex. rectangulaire ou autre).

L'invention n'est pas limitée à un ou plusieurs matériaux spécifiques de la bande 1. Les matériaux préférés sont néanmoins des matériaux utilisés le plus souvent pour fabriquer les appliques de montre, notamment le cuivre et les alliages de cuivre tel que le laiton, ou également l'or ou l'argent ou les alliages d'or ou d'argent.

Pour réaliser les trous pilotes 5 et les configurations d'ouvertures en forme d'ellipse ou autre, des méthodes bien connus en soi sont utilisables. Le cas précis de la bande 1 représentée à la figure 1 peut être réalisé par découpage d'une bande en 3 étapes répétées plusieurs fois, tel qu'il est illustré à la figure 6. Les sections d'un groupe de poinçons de découpage sont illustrées à la partie P du dessin. Une bande 1 par exemple en laiton passe en dessous du groupe de poinçons de différentes formes qui découpe simultanément tout matériau qui se présente. Ce type d'outil est connu comme une étampe progressive. Pour obtenir l'ensemble des trous pilotes et ouvertures ellipsoïdes, trois étapes A, B et C de découpage sont nécessaires, suivi chaque fois par l'avancement précis de la bande dans la direction des flèches. En répétant ces trois étapes plusieurs fois, on obtient la bande pourvue d'une pluralité de trous et d'ouvertures équidistantes.

## Revendications

1. Une méthode de fabrication d'au moins une applique (2) pour l'horlogerie, l'applique étant constituée d'un matériau prédéfini, la méthode comprenant :
- prévoir une bande longitudinale (1) en ledit matériau, la bande étant délimitée de deux bords parallèles,
- découper ou percer des rangées de trous pilotes (5) équidistants, le long de chacun des bords de la bande (1),
- centralement entre lesdites rangées de trous pilotes, découper ou percer au moins un groupe d'ouvertures (6) de sorte que des sections de contour desdites ouvertures définissent les bords d'une portion centrale (8) en ledit matériau, ladite portion centrale restant attachée à la bande par des attaches (7) définies par des zones étroites de la bande qui se trouvent entre deux ouvertures adjacentes,
- ensuite, à l'aide des trous pilotes (5), guider la bande à travers un outil d'emboutissage,
- à l'aide de l'outil d'emboutissage, exécuter simultanément au moins les actions suivantes :
∘ faire fluer le matériau de ladite portion (8) sans déformer les trous pilotes (5), de manière à produire une pièce déformée (8') qui reste attaché à la bande par des attaches (7'),
∘ sur une des faces de ladite pièce déformée (8'), produire l'applique (2) en relief par rapport à ladite face,
- ensuite, à l'aide des trous pilotes (5), guider la bande à travers un outil de découpage,
- soumettre la pièce (8') à l'outil de découpage, pour découper l'applique (2).

2. Une méthode selon la revendication 1, dans laquelle lesdits bords de la portion centrale (8) ont une forme concave par rapport au centre de ladite portion centrale.

3. Une méthode selon la revendication 1 ou 2, dans laquelle lesdites ouvertures (6a-6d) ont une forme d'ellipse.

4. Une méthode selon la revendication 3, dans laquelle le groupe consiste en 4 ouvertures (6a-6d) en forme d'ellipse, comprenant deux ouvertures (6a, 6b) dont les axes longs du contour sont orientés perpendiculairement à la direction longitudinale de la bande (1) et deux ouvertures (6c, 6d) dont les axes longs du contour sont orientés parallèlement à ladite direction longitudinale.

5. Une méthode selon l'une quelconque des revendications précédentes, dans laquelle la bande (1) comprend une pluralité desdits groupes d'ouvertures (6), agencés dans la bande de manière équidistante, pour produire une pluralité desdites portions centrales (8), et à partir de ces portions centrales (8), une pluralité d'appliques (2).

6. Une méthode selon l'une quelconque des revendications précédentes, dans laquelle à l'aide de l'outil d'emboutissage et simultanément avec lesdites actions de produire la pièce déformée et l'applique en relief par rapport à ladite face, un ou plusieurs pieds d'attachement (4) sont formés sur la face de ladite pièce déformée (8') qui oppose la face sur laquelle l'applique (2) est formée en relief.

7. Une méthode selon l'une quelconque des revendications précédentes, dans laquelle ledit matériau de l'applique (2) est le cuivre, l'or, l'argent, ou un alliage de cuivre, d'or ou d'argent.

8. Une méthode selon l'une quelconque des revendications précédentes, dans laquelle l'outil de découpage est un outil de découpage par laser ou un outil d'étampage utilisant une matrice et un poinçon de découpage.
